(19) **Europäisches Patentamt**

**European Patent Office**

**Office européen des brevets**

(11) Veröffentlichungsnummer : **0 315 586 B1**

(12) # EUROPÄISCHE PATENTSCHRIFT

(45) Veröffentlichungstag der Patentschrift :
04.09.91 Patentblatt 91/36

(51) Int. Cl.$^5$ : **B29C 45/26, B29C 45/27**

(21) Anmeldenummer : **88810684.6**

(22) Anmeldetag : **04.10.88**

(54) **Heisskanal-Spritzwerkzeug zur Herstellung von Einmal-Spritzenzylindern und dgl.**

(30) Priorität : **31.10.87 CH 4257/87**

(43) Veröffentlichungstag der Anmeldung :
**10.05.89 Patentblatt 89/19**

(45) Bekanntmachung des Hinweises auf die
Patenterteilung :
**04.09.91 Patentblatt 91/36**

(84) Benannte Vertragsstaaten :
**AT BE CH DE ES FR GB GR IT LI NL SE**

(56) Entgegenhaltungen :
**FR-A- 1 527 090**
**GB-A- 909 555**
**US-A- 4 184 836**
**DER PLASTVERARBEITER, Band 25, Nr. 8,**
**1974, Seiten 473-475, Speyer/Rhein, DE; J.**
**GAISER: "Spritzgiesswerkzeug zur Herstel-**
**lung dünnwandiger Hülsen**

(73) Patentinhaber : **SCHÖTTLI AG**
**Schlattingerbuck**
**CH-8253 Diessenhofen (CH)**

(72) Erfinder : **Schöttli, Martin**
**Rosenbergstrasse 20**
**CH-8200 Schaffhausen (CH)**
Erfinder : **Corvaglia Romeo**
**Buttelenstr. 233**
**CH-8262 Ramsen (CH)**

(74) Vertreter : **Gachnang, Hans Rudolf**
**Algisserstrasse 33**
**CH-8501 Frauenfeld (CH)**

## Beschreibung

Gegenstand der Erfindung ist ein Heisskanal-Spritzwerkzeug zur Herstellung von Einmal-Spritzenzylindern und dgl. gemäss Oberbegriff des Patentanspruches 1. Ein derartiges Werkzeug ist aus der US-A-4184836 bekannt.

Es ist bekannt, bei der Herstellung von Einwegspritzen mit Kaltkanal- oder Teilheiss-Kanalwerkzeugen die Spritzenform im oberen, in der Nähe des Spritzenansatzes liegenden Bereiches des Spritzenzylinders anzuspritzen. Bei diesem Spritzverfahren entsteht ein unvermeidbarer Anguss, der einerseits durch Trennen der Form entformt, ausgestossen und andererseits anschliessend wieder aufbereitet, d.h. sortiert und gemahlen werden muss. Dies bedingt eine Spritzform, die in zwei Ebenen geöffnet werden kann ; die eine zum Ausstossen des Angusses, die andere zum Ausstossen des Werkstückes. Eine grosse Bauhöhe ist die Folge.

Bei einem anderen bekannten Verfahren zur Herstellung von Einmal-Spritzenzylindern mit Vollheisskanal-Werkzeugen erfolgt das Anspritzen im Bereich des das offene untere Ende der Spritze umgebenden Griffrandes. Die beim Einspritzen mit hohem Druck und mit grosser Geschwindigkeit aus dem Hohlraum entweichende Luft kann die Form nur im sehr engen Bereich des Spritzenansatzes verlassen. Das explosionsartige Austreten der Luft erhitzt den dünnen, die Bohrung im Spritzenansatz bildenden Stift derart, dass anschliessend der eingespritzte Kunststoff durch den heissen Stift in diesem empfindlichen Bereich Brandstellen aufweisen kann. Im weiteren tritt nicht nur eine Erhitzung des Stiftes ein, sondern der geringe Gesamtquerschnitt des Luftspaltes zwischen dem Stift und dem Aussenwerkzeug setzt einen sehr hohen Anspritzdruck voraus, um die Luft in nützlicher Frist aus dem Werkzeug hinauspressen zu können und ein vorzeitiges Erstarren des Kunststoffes vor der vollständigen Füllung der Form zu verhindern.

Ein weiterer Nachteil dieser Vorgehensweise besteht darin, dass die Beheizungsmittel der Einspritzkanäle bis zum unteren Ende der Spritze, d.h. entlang der ganzen Matrize geführt werden müssen und einerseits sehr viel Raum beanspruchen, wodurch eine geringere Zahl von Formnestern in einem Werkzeug untergebracht werden können, und andererseits bewirkt die einseitige Lage der Heizmittel bezüglich der Achse der Spritzform eine ungleiche, einseitige Wärmeverteilung in der Form. Als Folge der einseitig höheren Temperatur verzieht sich der Formling nach dem Entformen durch stärkeres Nachschwinden auf der wärmeren Seite. Nebst der geringen Dichte von Formnestern haben die bekannten Spritzwerkzeuge den Nachteil, dass die Wärmezufuhr durch gemeinsame Heizstäbe für mehrere, meist vier, Formnester einen Produktionsausfall zwangsläufig an jeweils mehreren Formnestern zur Folge haben, auch wenn nur ein Heizelement seinen Dienst versagt.

Aus der US-PS 4,184,836 ist eine Spritzform bekannt, in der jeweils vier Spritzenzylinder durch einen zwischen diesen angeordneten Düsenkörper einseitig angespritzt werden. Damit eine rasche Verteilung des eingespritzten Kunststoffes im zylindrischen Hohlraum der Spritzlinge erfolgen kann, ist der Boden der Spritze unsymmetrisch ausgebildet, d.h. die Konizität des Ueberganges zwischen dem Typ und dem Spritzenzylinder weist die Gestalt eines schiefen Kegels auf. Eine solche Spritze hat den Nachteil, dass sie wegen ihrer Unsymmetrie nicht vollständig leer gespritzt werden kann und infolge der seitlichen Anspritzung die dabei auftretenden Kräfte der Kern verschoben wird. Dies führt zu ungleicher Wandstärke des Spritzenzylinders und den obengenannten Nachteilen.

In der englischen Patentschrift 909,555 wird die Herstellung von Kunststoffteilen im Kaltkanalverfahren beschrieben, dessen Nachteile bereits oben erläutert worden sind.

Die US-PS 2,878,517 betrifft eine Spritzform für ringförmige Produkte, bei denen der flüssige Kunststoff entlang des gesamten inneren Umfanges eingespritzt und nach der Entformung der filmartige Anguss abgetrennt werden muss. Dies führt wie bei allen Kaltkanalsystemen zu einem sehr grossen Abfallanteil und zusätzlicher Bearbeitung der Werkstücke.

Im Artikel aus "Der Plastverarbeiter", Band 25, Nr.80, 1974, Seiten 473-475 ; Jörg Gaiser : "Spritzgiesswerkzeug zur Herstellung dünnwandiger Hülsen" wird beschrieben, dass während des Einspritzens des Kunststoffes der Kern mechanisch festzuhalten sei, um gleichmässige Wandstärken zu erhalten. Im weiteren wird der dort gezeigte Spritzling zwar von zwei Seiten angespritzt, dies jedoch mit einem sogenannten Tunnelanguss, der zwei Trennebenen am Werkzeug benötigt und bei dem der erkaltete Tunnelanguss als Abfall anfällt und wieder aufgearbeitet werden muss.

Hier will die Erfindung Abhilfe schaffen.

Die Erfindung, wie sie im Anspruch 1 gekennzeichnet ist, löst die Aufgabe, ein Heisskanal-Mehrfachspritzwerkzeug zu schaffen, mit dem Einmal-Spritzenzylinder ohne den Anfall von Angüssen und mit grosser Genauigkeit herstellbar sind.

Besondere Ausführungsarten der Erfindung sind in den abhängigen Ansprüchen dargestellt.

In überraschender Weise gelingt es, im erfindungsgemässen Werkzeug einen gleichförmigen Einspritzdruck und infolge der koaxialen Anordnung der Heizelemente bzw. konzentrischen Anordnung der Kühlelemente eine gleichförmige Wärmeverteilung zu erreichen, so dass die Spritzenzylinder rundum eine konstante Wandstärke aufweisen, die einen einwandfreien Aufdruck der Inhaltsskala ermöglicht. Bei einem Defekt eines Formnestes kann dieses in der erfindungsgemässen Ausbildung leicht ausgetauscht oder ohne Auswirkungen auf die benachbarten Kavitäten bis zum Ende der Tagesschicht stillgelegt werden, da jedes Formnest einen eigenen Düsenkörper aufweist, der oben aus dem Werkzeug entnehmbar angeordnet ist.

Das Anspritzen im Bereich des Tips ermöglicht zudem kurze beheizte Kanäle und eine Anordnung der Heizelemente im wesentlichen axial versetzt zu den Formhohlräumen.

Ein weiterer Vorteil der Erfindung besteht darin, dass die beim Anspritzen aus dem Hohlraum verdrängte Luft im Bereich des grössten Querschnittes des Zylinders, d.h. beim Griffflansch austreten kann.

Durch symmetrisches Anspritzen mit zwei oder mehr Anspritzkanälen kann trotz hohem Anspritzdruck ein seitliches Ausweichen des Formkernes vermieden werden.

Anhand eines illustrierten Ausführungsbeispieles wird die Erfindung näher erläutert.

Es zeigen :

Figur 1    einen Querschnitt durch ein geschlossenes Spritzwerkzeug für einen Spritzling,
Figur 2    einen Querschnitt durch ein geöffnetes Spritzwerkzeug und
Figur 3    einen vergrössert dargestellten Querschnitt durch eine Anspritzbohrung (Bereich "X" in Figur 1).

In den Figuren ist der besseren Uebersichtlichkeit halber ein Werkzeug 1 mit nur einem Formling 2, im beschriebenen Beispiel ein Spritzenzylinder, dargestellt. Für den industriellen Einsatz können selbstverständlich je nach Grösse und Leistung der Spritzmaschine bekannter Bauweise 2 bis 128 und allenfalls mehr Spritzlinge 2 bei entsprechender Anzahl von Formnestern gleichzeitig hergestellt werden.

Die Führungen zum Trennen der Formhälften und zum Ausstossen der Formlinge sind von herkömmlicher Bauart und werden nur so weit dargestellt und beschrieben, wie dies für das Verständnis der Funktionsweise der Erfindung notwendig ist.

Das Spritzwerkzeug 1 besteht aus zwei durch eine Trennebene A teilbare Form- oder Werkzeughälften 3, 5, die durch mehrere Linearführungsmittel 7 präzise relativ zueinander verschiebbar sind. Als Führungsmittel 7 können mit der Werkzeughälfte 5 verbundene zylindrische Bolzen 9 eingesetzt sein, die in entsprechenden Führungsbüchsen 11 in der Werkzeughälfte 3 eingelassen sind, vorgesehen sein. Die Ausbildung der Führungsmittel 7 ist, wie bereits erwähnt, bekannt.

Die die im vorliegenden Beispiel zylindrische Aussenwand des Mantels 12 des Formlings 2, d.h. des Einmalspritzenzylinders bildende Bohrung 13 ist in einem Einsatz 14 in der Formhälfte 3 eingelassen. Die Bohrung 13 ist am oberen Ende durch einen konischen oder planen Boden 15 abgeschlossen, an dem die Ausnehmung für den konzentrisch oder exzentrisch ausgebildeten genormten Spritzenansatz (Luer-Kegel), kurz Tip 17 genannt, angeordnet ist. Selbstverständlich könnte auch ein Tip 17 mit einer zusätzlichen, ebenfalls genormtem, den Tip 17 umgebenden Hülse mit einem Innengewinde (Luer-Lock) hergestellt werden. Die dazu notwendigen Ausdreh- oder Abstreifvorrichtungen lassen sich ohne weiteres in der Formhälfte 3 unterbringen (keine Darstellung).

Am unteren Ende, d.h. am Eingang der Bohrung 13 ist üblicherweise eine Ausnehmung 19 für die Ausbildung eines Griffflansches mit einer ein- oder beidseitigen, laschenförmigen Erweiterung ausgebildet.

An der Formhälfte 5, die beim geschlossenen Werkzeug 1 auf der Hälfte 3 aufliegt, ist ein Formkern 21 ausgebildet, der exakt konzentrisch zu der Bohrung 13 liegt und in diese unter Bildung eines Form- oder Hohlraumes 23 eingreift. In das Ende des Formkerns 21 ist ein Stift 25 zur Bildung der Bohrung im Tip 17 eingesetzt. Der Stift 25 kann auch an der Formhälfte 3 befestigt sein und in den Formkern 21 hineinragen.

Zur Kühlung des Formkerns 21 sind in diesem ein Kühlmittelkanal 27 eingelassen, der mit einer Kühlmittelzirkulationsleitung 29 verbunden ist (nur andeutungsweise dargestellt).

Erfindungsgemäss sind über dem Boden 15 in je einem Düsenkörper 35 zwei beheizbare Anspritzkanäle 31 eingelassen, die in je eine Ausnehmung 34 im Bereich des Ueberganges zwischen der Bohrung 13 und dem Boden 15 in den Hohlraum 23 einmünden. Der Querschnitt der Ausnehmung 34 ist wesentlich grösser als der Querschnitt der Anspritzkanäle 31. Konzentrisch zu den Anspritzkanälen 31 sind am Düsenkörper 35 ringförmige Räume 38 ausgebildet, die beim ersten Spritzzyklus mit Kunststoff aufgefüllt werden und die Anspritzkanäle 31 gegenüber der Umgebung isolieren. Die Düsenkörper 35 befinden sich innerhalb eines Bereiches, der koaxial zum Einsatz 14 liegt und im wesentlichen den gleichen Querschnitt, bzw. Grundriss aufweist wie der Einsatz 14.

Zwischen der Ausnehmung 34 und dem Hohlraum 23 ist eine kanalförmige Verengung in Gestalt einer Anspritzbohrung 32 angebracht, die im wesentlichen radial zur Symmetrieachse des Formraumes 23 in diesen einmündet.

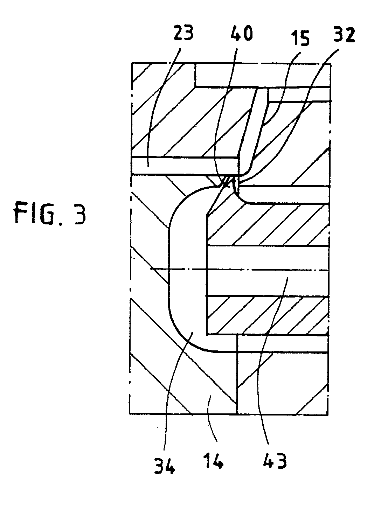

Die Anspritzbohrung 32 weist einen gegen den Hohlraum 23 hin vorzugsweise abnehmenden Querschnitt auf, in den eine am Düsenkörper 35 angebrachte Nase 40 unter Bildung eines Ringraumes hineinragt. Das Ende der Nase 40 reicht bis zur Oberfläche der Bohrung 13 (vgl. Figur 3).

Anstelle von zwei Anspritzkanälen 31 können auch eine grössere Zahl vorgesehen werden, die symmetrisch zur Achse der Bohrung 13 liegen und für eine gleichmässige Druckverteilung im Hohlraum 23 sorgen. Die Düsenkörper 35 können auch aus Kupferrohren oder dgl. bestehen. Es ist auch möglich, die Düsenkörper 35 und den Düsenkörperhalter 33 aus einem Stück zu fertigen.

Der die Kanäle 31 und allenfalls auch die Beheizungsmittel 41 aufnehmende, koaxial oberhalb des Formraumes 23 liegende Düsenkörper 35 ist in einem mit der Werkzeughälfte 3 verbundenen Düsenkörperhalter 33 und dieser wiederum in einem einfach abnehmbaren Verteilerblock 37 untergebracht. Der Verteilerblock 37 kann selbstverständlich auch mehrere Düsenkörperhalter 33 aufnehmen.

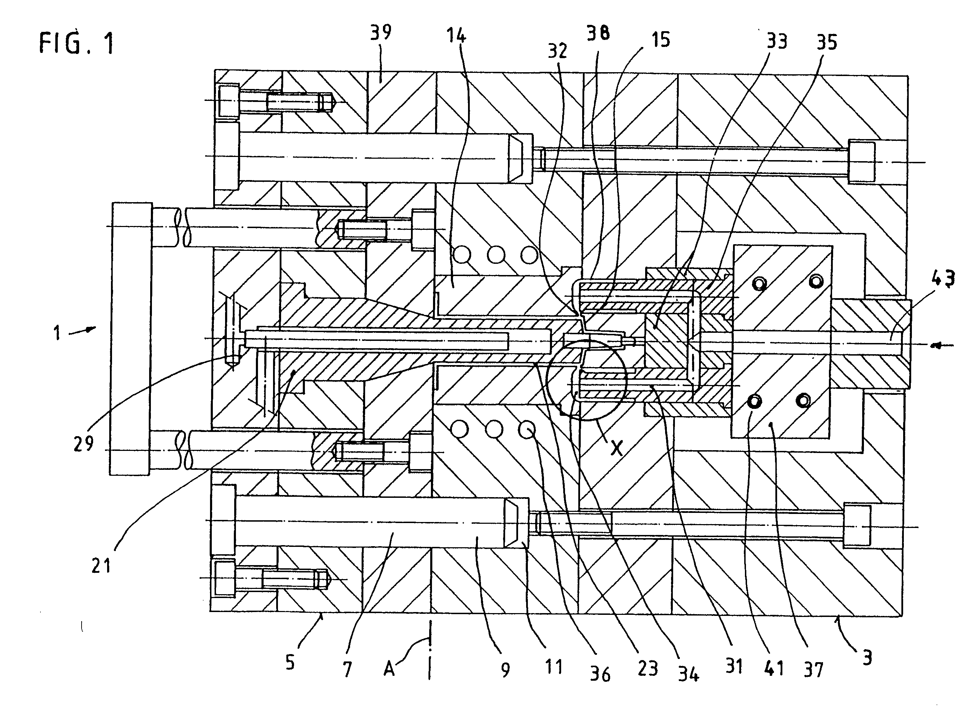

Die Beheizung der Kanäle 31 kann bei entsprechender Isolation induktiv, durch eine handelsübliche Widerstandsheizung oder in anderer geeigneter Form erfolgen. Die Heizelemente 41 liegen in jedem Fall oberhalb der durch den Boden 15 gedachten Ebene. Sie können, wie Figur 1 zeigt, im Verteilblock 37 seitlich der zentralen Einspritzleitung 43 liegen. Weitere Heizelemente 41 können seitlich der Einspritzkanäle 31 eingesetzt sein.

Da bei Mehrfachwerkzeugen nach der Erfindung zwischen den einzelnen, nebeneinander liegenden Hohlräumen 23 für die Spritzlinge 2 nur die Kühlkanäle 36 zur Kühlung des Zylinder- bzw. Hubraumbereiches hindurchgeführt werden müssen, weil die Anspritzkanäle 31 nur von oben und nur bis zum Bereich B, wo der Boden 15 und der Mantel 12 des Formlings 2 ineinander übergehen, herangeführt werden müssen, lassen sich die einzelnen Formnester mit geringem gegenseitigem Abstand nebeneinander anordnen und sind ohne gegenseitige Beeinträchtigung und einseitige thermische Belastung stirnseitig leicht zugänglich. Im Gegenteil : die Kühlkanäle 36 können exakt kozentrisch angeordnet werden. Der äussere Querschnitt des Einsatzes 14 entspricht im wesentlichen dem Querschnitt des Düsenhalters 33. Mit anderen Worten ; jedes Formnest besteht aus zwei ähnlich grossen, in Werkzeug 1 einsetzbaren, koaxial zueinander liegenden leicht auszutauschenden kompakten Einheiten.

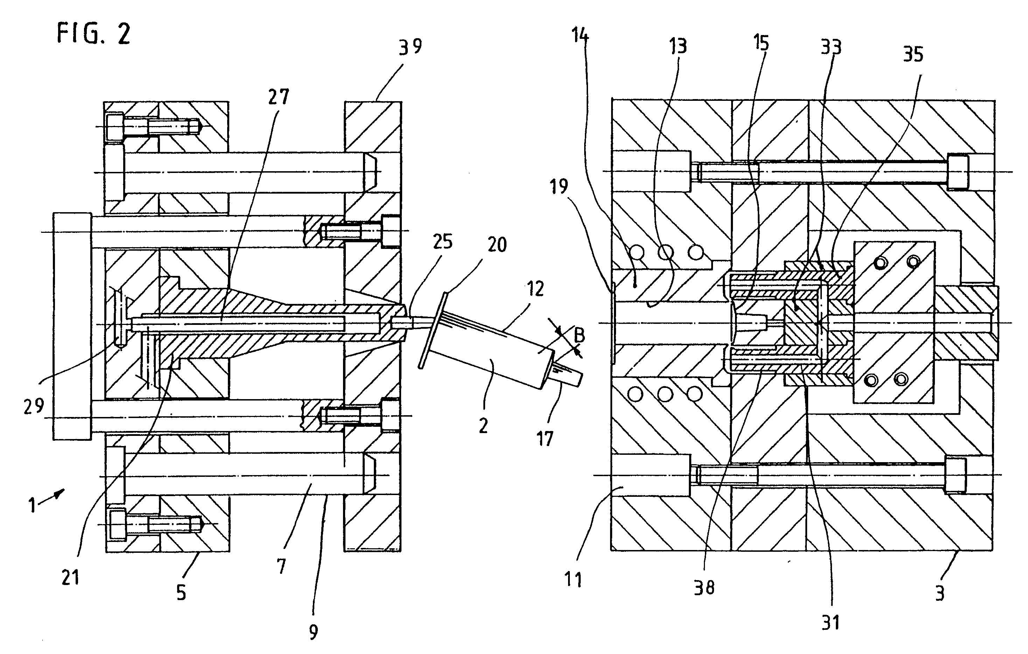

Der besseren Uebersichtlichkeit halber ist das Werkzeug 1 in Figur 2 in geöffnetem Zustand dargestellt. Der Formling 2 ist durch einen Ausstosser 39 vom Formkern 21 abgestossen worden, nachdem vorgängig die beiden Formhälften 3 und 5 auseinander gefahren worden sind. Beim Oeffnen des Werkzeuges 1 wird die Verbindung zwischen dem Formling 2 und der in der Anspritzbohrung 32 befindlichen, weichen Kunststoffmasse abgeschert. Ein wieder aufzubereitender Anguss fällt nicht an, da das in der Bohrung 32 befindliche Material beim folgenden Spritzhub eingespritzt wird.

Die Erfindung ist am Beispiel eines Spritzenzylinders beschrieben worden. Selbstverständlich können mit Werkzeugen, die die erfindungsgemässen Merkmale aufweisen, auch andere ähnliche Produkte wie Tuben, Kartuschen für Dichtungsmassen, Kugelgeschreibergehäuse und dgl. hergestellt werden.

## Patentansprüche

1. Heisskanal-Mehrfachspritzwerkzeug (1) zur Herstellung von Einmal-Spritzenzylindern (2) und dgl. mit einem durch eine Bohrung (13) und einen Formkern (21) gebildeten Formraum (23), der oben durch einen Boden (15) und einen im Boden (15) angeordneten konischen Ringraum zur Bildung des Spritzenaufnahmetips (17) und unten durch eine einen Flansch (20) bildende Ausnehmung (19) begrenzt ist, mit einer Formtrennung im Bereich der Ausnehmung (19) und einem Anspritzkanal (31) zum Einspritzen von füssigem Kunststoff in den Formraum (23), sowie Mittel (41) zum Beheizen des Anspritzkanales (32) und Mittel (36) zum Kühlen eines den Formraum (23) bildenden Einsatzes (14) und des Formkerns (21), dadurch gekennzeichnet, dass mindestens zwei beheizte Anspritzkanäle (31) je in einem oberhalb des Bodens (15) befindlichen, im wesentlichen koaxial zum Formraum (23) liegenden Bereich angeordneten Düsenkörper (35) ausgebildet sind, wobei die Einspritzkanäle (31) im Bereich (B) des Bodens (15) enden.

2. Heisskanal-Mehrfachspritzwerkzeug nach Anspruch 1, dadurch gekennzeichnet, dass der Düsenkörper (35) mindestens an seinem vom Boden (15) abgewendeten Ende in einem Düsenkörperhalter (33) eingesetzt und gehalten ist.

3. Heisskanal-Mehrfachspritzwerkzeug nach einem der Ansprüche 1 oder 2, dadurch gekennzeichnet, dass zwischen dem Ende der Anspritzkanäle (31) und dem Formraum (23) eine Querschnittsverengung vorliegt.

4. Heisskanal-Mehrfachspritzwerkzeug nach Anspruch 3, dadurch gekennzeichnet, dass die Anspritzbohrung (32) einen gegen den Formraum (23) hin abnehmenden Querschnitt aufweist und dass eine am Düsenkörper (35) befestigte Nase (40) in die Anspritzbohrung (32) hineinragt.

5. Heisskanal-Mehrfachspritzwerkzeug nach einem der Ansprüche 3 oder 4, dadurch gekennzeichnet, dass die Anspritzbohrung (32) radial zur Symmetrieachse des Hohlraumes (23) in diesen einmündet.

6. Heisskanal-Mehrfachspritzwerkzeug nach einem der Ansprüche 1 bis 5, dadurch gekennzeichnet, dass der Düsenhalter (33) von einem in der Werkzeughälfte (3) einsetzbaren Verteilerblock (37) getragen wird.

7. Heisskanal-Mehrfachspritzwerkzeug nach einem der Ansprüche 1 bis 6, dadurch gekennzeichnet, dass der Querschnitt des Düsenhalters (33) im wesentlichen dem Querschnitt des den Formraum (23) für den Formling (2) aufnehmenden Einsatzes (14) entspricht.

8. Heisskanal-Mehrfachspritzwerkzeug nach einem der Ansprüche 1 bis 7, dadurch gekennzeichnet, dass die Heizelemente (41) für die Einspritzkanäle (31) oberhalb des Bodens (15) angeordnet sind.

9. Heisskanal-Mehrfachspritzwerkzeug nach Anspruch 8, gekennzeichnet, dass die Heizelemente (41) im Düsenkörper (35) und/oder im Düsenkörperhalter (33) im wesentlichen innerhalb einer Querschnittsfläche angeordnet sind, die dem Querschnitt des Einsatzes (14) entspricht.

10. Heisskanal-Mehrfachspritzwerkzeug nach einem der Ansprüche 8 oder 9, dadurch gekennzeichnet, dass Heizelemente (41) nur im Verteilerblock (37) eingesetzt und die Mittel (36) zum Kühlen konzentrisch zum Formraum (23) angeordnet sind.

## Claims

1. A hot runner multiple injection tool (1) for manufacturing one-time syringe cylinders (2) and the like with a mould space (23) formed by a bore (13) and a mould core (21), said mould space (23) being defined at the top by a base (15) and a conical annular space, disposed in the base (15), for forming the receiving tip (17) of the syringe and at the bottom a recess (19) forming a flange (20), with a mould separation in the vicinity of the recess (19), and an injection duct (31) for injecting liquid plastics material into the mould space (23), as well as means (41) for heating the injection duct (32) and means (36) for cooling an insert (14) forming the mould space (23), and for cooling the mould core (21), characterised in that at least two heated injection ducts (31) are formed respectively in a nozzle member (35) located above the base (15) and in an area lying substantially coaxially with the mould space (23), the injection ducts (31) terminating in area (b) of the base (15).

2. A hot runner multiple injection tool according to Claim 1, characterised in that the nozzle member (35) is inserted into and held, at least at its end facing away from the base (15), in a nozzle member holder (33).

3. A hot runner multiple injection tool according to one of Claims 1 or 2, characterised in that there is a constriction in the cross-section between the end of the injection ducts (31) and the mould space (23).

4. A hot runner multiple injection tool according to Claim 3, characterised in that the injection bore (32) has a cross-section which tapers down towards the mould space (23), and that a nose (40) attached to the nozzle member (35) projects into the injection bore (32).

5. A hot runner multiple injection tool according to one of Claims 3 or 4, characterised in that the injection bore (32) opens radially to the axis of symmetry of the hollow space (23) into said space (23).

6. A hot runner multiple injection tool according to one of Claims 1 to 5, characterised in that the nozzle holder (33) is carried by a distributor block (37) insertable into the tool half (3).

7. A hot runner multiple injection tool according to one of Claims 1 to 6, characterised in that the cross-section of the nozzle holder (33) substantially corresponds to the cross-section of the insert (14) receiving the mould space (23) for the moulded item (2).

8. A hot runner multiple injection tool according to one of Claims 1 to 7, C the heating elements (41) for the injection ducts (31) are disposed above the base (15).

9. A hot runner multiple injection tool according to Claim 8, characterised in that the heating elements (41) are disposed in the nozzle member (35) and/or in the nozzle member holder (33) substantially within a cross-sectional surface which corresponds to the cross-section of the insert (14).

10. A hot runner multiple injection tool according to one of Claims 8 or 9, characterised in that heating elements (41) are inserted only in the distributor block (37), and the cooling means (36) are disposed concentrically with the mould space (23).

## Revendications

1. Moule d'injection multiple (1) à canal chauffant pour réaliser des seringues jetables (2) et analogues, comportant une cavité de moulage (23) définie par un alésage (13) et un noyau de moulage (23), cette cavité de moulage étant limitée en haut par un fond (15) et un volume annulaire conique prévu à l'endroit du fond (15) pour réaliser l'embout (17) de la seringue, et limitée en bas par un chambrage (19) prévu pour réaliser une collerette (20), un plan de séparation du moule étant prévu au voisinage du chambrage (19), ainsi qu'un canal d'injection (31) pour injecter de la matière plastique en fusion dans la cavité de moulage (23), outre des moyens de chauffage (41) pour chauffer le canal d'injection (32) du moule et des moyens de refroidissement (36) pour refroidir une pièce rapportée (14) qui contient la cavité de moulage (23) et refroidir également le noyau de moulage (21), caractérisé en ce qu'il comporte au moins deux canaux d'injection chauffés (31) qui sont ménagés chacun dans une tubulure (35) disposée au-dessus du fond (15) dans une zone sensiblement coaxiale à la cavité de moulage (23), ces canaux d'injection (31) débouchant dans la zone (B) du fond (15).

2. Moule d'injection multiple à canal chauffant selon la revendication 1, caractérisé en ce que la tubulure (35), au moins à l'endroit de son extrémité opposée au fond (15), est montée et retenue dans une monture (33).

3. Moule d'injection à canal chauffant selon l'une des revendications 1 ou 2, caractérisé en ce qu'un passage de section rétrécie est prévu entre l'extrémité du canal d'injection (31) et la cavité de moulage (23).

4. Moule d'injection à canal chauffant selon la revendication 3, caractérisé en ce que le perçage d'injection (32) présente une section transversale qui va en décroissant en direction de la cavité de moulage (23), et en ce qu'un bec (40) solidaire de la tubulure d'injection (35) pénètre dans le perçage d'injection (32).

5. Moule d'injection à canal chauffant selon l'une des revendications 3 ou 4, caractérisé en ce que le perçage d'injection (32) débouche dans la cavité de moulage (23) avec une orientation radiale par, rapport à l'axe de symétrie de cette cavité.

6. Moule d'injection à canal chauffant selon l'une des revendications 1 à 5, caractérisé en ce que la monture (33) de la tubulure d'injection est poctée par un bloc de distribution (37) adapté à être mis en place dans la moitié (3) du moule.

7. Moule d'injection à canal chauffant selon l'une des revendications 1 à 6, caractérisé en ce que la section transversale de la monture (33) de la tubulure d'injection correspond sensiblement à celle de la pière rapportée (14) qui contient la cavité de moulage (23) prévue pour la pièce moulée (2).

8. Moule d'injection à canal chauffant selon l'une des revendications 1 à 7, caractérisé en ce que les éléments chauffants (41) pour les canaux d'injection (31) sont disposés au-dessus du fond (15).

9. Moule d'injection à canal chauffant selon la revendication 8, caractérisé en ce que les éléments chauffants (41) associés aux tubulures d'injection (35) et/ou à la monture (33) de ces tubulures sont disposés sensiblement à l'intérieur d'une surface de révolution dont la section transversale correspond à celle de la pièce rapportée (14).

10. Moule d'injection à canal chauffant selon l'une des revendications 8 ou 9, caractérisé en ce qu'il ne comporte que des éléments chauffants (41) disposés dans le bloc de distribution (37), les moyens de refroidissement (36) étant disposés de manière concentrique par rapport à la cavité de moulage (23).

FIG. 1

FIG. 2

FIG. 3